# EUROPÄISCHE PATENTANMELDUNG

(11) **EP 1 082 924 A1**
(43) Veröffentlichungstag der Anmeldung: **14.03.2001**
(21) Anmeldenummer: 00118049.6
(22) Anmeldetag: 23.08.2000
(51) Int. Cl.: A47C 7/02, B60N 2/72

(54) **Verfahren zur Herstellung eines ergonomischen Fahrzeugsitzes**

(30) Priorität: 09.09.1999 DE 19942979
(71) Anmelder: Recaro GmbH & Co., 73230 Kirchheim/Teck (DE)
(72) Erfinder: Putsch, Martin, 67806 Rockenhausen (DE); Baule, Rolf-Peter, 73087 Boll (DE)
(74) Vertreter: Patentanwälte Hosenthien-Held und Dr. Held

(57) **Zusammenfassung**

Bei einem Verfahren zur Herstellung eines Fahrzeugsitzes, insbesondere eines Kraftfahrzeugsitzes, der an seinen Benutzer anpaßbar ist und dessen Sitzteil (20) und/oder Rückenlehne (10) ein Polster (12) aufweist, wird das Polster (12) bei der Herstellung an den Benutzer angepaßt.

## Beschreibung

Die Erfindung betrifft ein Verfahren zur Herstellung eines Fahrzeugsitzes mit den Merkmalen des Oberbegriffs des Anspruches 1.

Es ist bekannt, Fahrzeugsitze mit einstellbaren Teilen auszubilden, beispielsweise im Bereich der Lordose, des Beckenkamms oder der Oberschenkel des Benutzers, oder einen Längseinsteller oder Höheneinsteller vorzusehen, um den Sitzkomfort durch eine gewisse Anpassung an den Benutzer zu verbessern. Eine ergonomisch optimale, individuelle Anpassung ist bei Seriensitzen jedoch nicht möglich, da solche Seriensitze Sitzpercentile von 5% Frau und 95% Mann aufweisen sollen.

Der Erfindung liegt die Aufgabe zu Grunde, ein Verfahren zur Herstellung eines Fahrzeugsitzes der eingangs genannten Art zu verbessern. Diese Aufgabe wird erfindungsgemäß durch ein Verfahren mit den Merkmalen des Anspruches 1 gelöst. Vorteilhafte Ausgestaltungen sind Gegenstand der Unteransprüche.

Dadurch, daß das Polster bereits bei der Herstellung an den Benutzer angepaßt wird, wird ein Fahrzeugsitz hergestellt, der ergonomisch optimal, komfortabel und individuell an die Vorgaben und Wünsche des Benutzer angepaßt ist.

Die Anpassung erfolgt vorzugsweise nach der Körperform des Benutzers, kann aber auch weitere individuelle Vorgaben, wie das Gewicht des Benutzers, und Erfahrungswerte, wie das Eindrückverhalten des Polstermaterials, berücksichtigen. Die Herstellung beginnt dann vorzugsweise damit, daß zunächst die Körperform des Benutzers aufgenommen wird und diese dann rechnergestützt verarbeitet wird. Um die Herstellungskosten zu senken, wird das Polster dann vorzugsweise aus einem Rohling herausgearbeitet, beispielsweise aus einem Schaumstoffrohling herausgefräst. Um weitere Kosten zu sparen, weist der Rohling vorzugsweise bereits eine an eine serienmäßige Sitzstruktur angepaßte Seite auf, so daß dann nur die dem Benutzer zugewandte Seite individuell bearbeitet wird.

Das ergonomisch optimale, individuell angepaßte Polster wird nach seiner Herstellung vorzugsweise mit einem angepaßten Bezug überzogen. Vorzugsweise weist dieser besonderes gute Dehneigenschaften auf, wie beispielsweise ein biaxial dehnbarer Bezugsstoff. Es ist dann auch möglich, statt des angepaßten Bezugs auch einen serienmäßigen Bezug zu verwenden. Die Herstellung eines angepaßten Bezugs erfolgt vorzugsweise unter Verwendung der rechnergestützt verarbeiteten Daten der Körperform des Benutzers. Zugleich können dann bei der Herstellung des Polsters und des Bezugs die gegenseitigen Befestigungselemente, Abhängekanäle etc, an Stellen eingearbeitet werden, die an die Körperform angepaßt sind.

Im folgenden ist die Erfindung anhand eines Ausführungsbeispiels näher erläutert.

Zunächst wird die Körperform des jeweiligen Benutzers aufgenommen. Für eine digitale Aufnahme wird beispielsweise eine 3D-Lasertechnik mit Flächengenerierung oder eine Streifenprojektion mit CCD-Videokamera und Punktwolke verwendet. Vorzugsweise erfolgt die Aufnahme im sitzenden Zustand, kann aber auch im stehenden Zustand erfolgen. Hilfsweise kann die Form einzelner Körperteile mittels eines Vakuumkissens fixiert oder mittels eines Gipsabdrucks oder sonstiger dreidimensional wirkender Hilfsmittel in Echtmaßen abgenommen werden, beispielsweise bei Behinderten. Im Fall eines Gipsabdrucks wird dann dieser digital aufgenommen werden. Die aufgenommen, digitalen Daten der Körperform werden gespeichert und rechnergestützt verarbeitet, insbesondere hinsichtlich der zu erwartenden Gewichtsverteilung und Eindrucktiefen in ein Polster.

Ein Polsterrohling aus Schaumstoff wird einer CNC-Mehrachsfräsmaschine zugeführt und von dieser entsprechend der verarbeiteten, digitalen Daten der Körperform bearbeitet. Gegebenenfalls notwendige Abhängekanäle zur Befestigung des Bezugs werden vorzugsweise von der Fräsmaschine im gleichen Arbeitsvorgang oder von einer gesonderten Schneidevorrichtung hergestellt. Bei der Lage der Abhängekanäle wird vorzugsweise die Körperform berücksichtigt. Die Befestigungselemente für den Bezug können beispielsweise mit einer Hochfrequenzschweißvorrichtung in das Polster eingeschweißt werden.

Um das Polster in eine Serien-Sitzstruktur einbauen zu können, wird nur die dem Benutzer zugewandte A-Seite des Polsterrohlings von der Fräsmaschine bearbeitet. Die der Sitzstruktur zugewandte B-Seite des Polsterrohling erhält bereits bei dessen Herstellung die passende Form. Bei der Bearbeitung des Polsterrohlings kann ein späterer Einbau von einstellbaren Teilen, beispielsweise einer Lordosenstütze oder Seitenwangen, oder eines Klimasystem, einer Drahtbügelverstärkung etc. berücksichtigt werden.

Der Bezug für das Polster wird auf Grundlage der verarbeiteten, digitalen Daten der Körperform hergestellt. Die Abhängigkeit des Bezugs von der Form des Polsters wird beispielsweise über ein Masterpolster oder über das individuelle Polster ermittelt. Vorzugsweise erfolgt die Herstellung durch eine spezielle Web-Strick-Maschine, welche bei der Maschenzahl und der Maschenweite die individuelle Form des Polsters berücksichtigt und im Herstellungsprozeß zugleich die Abhängeelemente erzeugt. Ein bevorzugtes Bezugsmaterial ist ein biaxial dehnbarer Bezugsstoff mit einer Dehnung von ca. 30%. Der Bezug kann auch mit einem konventionellen Web- oder Strickverfahren hergestellt werden.

Für eine schnelle Datenweitergabe ist die Web-Strick-Maschine zusammen mit der Fräsmaschine für das Polster am gleichen Rechnernetz angeschlossen wie die Vorrichtung zur digitalen Aufnahme der Körperform und der Rechner zur Verarbeitung der digitalen Daten der Körperform.

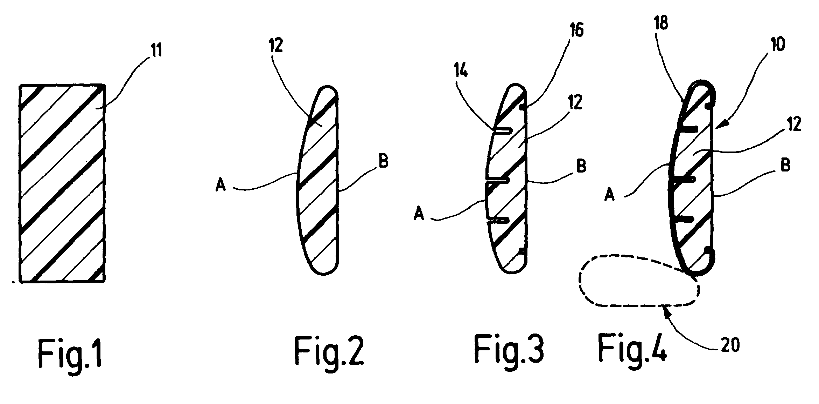

Die Herstellung einer Rückenlehne 10 ist in der Zeichnung dargestellt. Fig. 1 zeigt einen Schnitt durch einen Polsterrohling 11, bevor er bearbeitet wird. Fig. 2 zeigt einen Schnitt durch ein Polster 12, nachdem es durch eine Fräsmaschine bearbeitet wurde, wobei die A-Seite gemäß der Körperform bearbeitet wird und die B-Seite auf die Sitzstruktur abgestimmt ist. Fig. 3 zeigt einen Schnitt durch das Polster 12 mit Abhängekanälen 14 und Befestigungselementen 16. Fig. 4 zeigt einen Schnitt durch die Rückenlehne 10 mit ihrem Polster 12 und ihrem Bezug 18. Die Umrißlinie des Sitzteiles 20 ist durch gestrichelte Linie angedeutet. Die festen Teile der Sitzstruktur sind nicht dargestellt.

### Bezugszeichenliste

- 10: Rückenlehne
- 11: Polsterrohling
- 12: Polster
- 14: Abhängekanal
- 16: Befestigungselement
- 18: Bezug
- 20: Sitzteil
- A: benutzerzugewandte Seite
- B: sitzstrukturzugewandte Seite

## Patentansprüche

1. Verfahren zur Herstellung eines Fahrzeugsitzes, insbesondere eines Kraftfahrzeugsitzes, der an seinen Benutzer anpaßbar ist und dessen Sitzteil und/oder Rückenlehne ein Polster aufweist, dadurch gekennzeichnet, daß das Polster bei der Herstellung an den Benutzer angepaßt wird.

2. Verfahren nach Anspruch 1, dadurch gekennzeichnet, daß das Polster nach der Körperform des Benutzers hergestellt wird.

3. Verfahren nach Anspruch 2, dadurch gekennzeichnet, daß zunächst die Körperform des Benutzers aufgenommen wird und diese dann rechnergestützt verarbeitet wird.

4. Verfahren nach Anspruch 2 oder 3, dadurch gekennzeichnet, daß das Polster nach der Körperform des Benutzers aus einem Rohling herausgearbeitet wird.

5. Verfahren nach Anspruch 3 und 4, dadurch gekennzeichnet, daß das Polster nach der rechnergestützt verarbeiteten Körperform des Benutzers aus einem Schaumstoffrohling herausgefräst wird.

6. Verfahren nach einem der Ansprüche 1 bis 5, dadurch gekennzeichnet, daß das Polster nach der Herstellung eine an den Benutzer angepaßte Seite und eine an eine serienmäßige Sitzstruktur angepaßte Seite aufweist.

7. Verfahren nach einem der Ansprüche 1 bis 6, dadurch gekennzeichnet, daß das Polster mit einem angepaßten Bezug überzogen wird.

8. Verfahren nach Anspruch 3 und 7, dadurch gekennzeichnet, daß der Bezug nach der rechnergestützt verarbeiteten Körperform des Benutzers hergestellt wird.

9. Verfahren nach Anspruch 7 oder 8, dadurch gekennzeichnet, daß der Bezug aus einem biaxial dehnbaren Bezugsstoff hergestellt wird.

10. Verfahren nach einem der Ansprüche 1 bis 9, dadurch gekennzeichnet, daß bei der Herstellung des Polsters und des Bezuges angepaßte Befestigungselemente eingearbeitet werden.
